# EUROPÄISCHE PATENTSCHRIFT

(11) **EP 2 906 846 B1**
(45) Veröffentlichungstag und Bekanntmachung des Hinweises auf die Patenterteilung: **03.07.2019**
(21) Anmeldenummer: 13765630.2
(22) Anmeldetag: 14.08.2013
(51) Int. Cl.: F16D 13/58, F16D 13/75

(54) **REIBUNGSKUPPLUNGSEINRICHTUNG**
FRICTIONAL CLUTCH DEVICE
DISPOSITIF D'EMBRAYAGE À FRICTION

(30) Priorität: 09.10.2012 DE 102012218383; 26.10.2012 DE 102012219608; 09.11.2012 DE 102012220463; 04.12.2012 DE 102012222124
(43) Veröffentlichungstag der Anmeldung: 19.08.2015
(73) Patentinhaber: Schaeffler Technologies AG & Co. KG, 91074 Herzogenaurach (DE)
(72) Erfinder: TREFFEISEN, Florian, 76185 Karlsruhe (DE); RABER, Christoph, 66564 Ottweiler-Steinbach (DE); KELLER, Marion, 77815 Bühl (DE)
(86) Internationale Anmeldenummer: PCT/DE2013/200125
(87) Internationale Veröffentlichungsnummer: WO 2014/056495

(56) Entgegenhaltungen:
- CN-A- 102 434 597
- DE-A1- 4 013 186
- DE-A1- 4 132 349
- DE-A1- 4 326 501
- DE-A1- 4 430 249
- FR-A1- 2 896 841
- GB-A- 2 120 329

## Beschreibung

Die vorliegende Erfindung betrifft eine Reibungskupplungseinrichtung gemäß dem Oberbegriff des Patentanspruchs 1. Insbesondere betrifft die Erfindung eine Reibungskupplungseinrichtung, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte und eine zweite Feder zur Reduzierung einer Betätigungskraft in einem Verschleißzustand.

Aus der älteren, nicht vorveröffentlichten DE 10 2012 218 876 A1 ist eine Betätigungseinrichtung bekannt für eine Reibungskupplung mit einem Kupplungsdeckel, einer direkt oder indirekt an dem Kupplungsdeckel um einen, insbesondere ringförmigen, Schwenkbereich schwenkbar gelagerten Tellerfeder zum Verlagern einer Anpressplatte zum Verpressen einer Kupplungsscheibe zwischen der Anpressplatte und einer Gegenplatte, einer direkt oder indirekt an dem Kupplungsdeckel abgestützten Stützfeder zur Bereitstellung eines Gegenlagers zur Abtragung der an dem Schwenkbereich auftretenden Kräfte der Tellerfeder, und einer, insbesondere tellerfederartig ausgebildeten, in axialer Richtung zwischen der Stützfeder und der Tellerfeder angeordneten Servofeder, wobei sich die Tellerfeder und die Servofeder in zumindest zwei in radialer Richtung voneinander beabstandeten Anlagebereichen miteinander in Anlage befinden, um eine Betätigungseinrichtung für eine Reibungskupplung anzugeben, durch die über die Lebensdauer der Reibungskupplung nur ein geringer Anstieg der Betätigungskraft zum Verlagern einer Anpressplatte erzielbar ist.

Aus der älteren, nicht vorveröffentlichten DE 10 2012 219 711 A1 ist eine Reibungskupplungseinrichtung bekannt, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte, eine Betätigungseinrichtung und eine zweite Feder mit einem ersten Abstützabschnitt zur Abstützung an dem Gehäuse, einem zweiten Abstützabschnitt zur Abstützung an der ersten Feder und einem dritten Abstützabschnitt zur Abstützung an der Betätigungseinrichtung, um die Reibungskupplungseinrichtung baulich und/oder funktional zu verbessern.

Aus der CN 102 434 597 A ist eine Reibungskupplungseinrichtung bekannt, die auf den Oberbegriff des Patentanspruchs 1 lesbar ist.

Der Erfindung liegt die Aufgabe zugrunde, eine eingangs genannte Reibungskupplungseinrichtung baulich und/oder funktional weiter zu verbessern. Insbesondere soll ein sicherer Betrieb über die Lebensdauer der Reibungskupplungseinrichtung sichergestellt sein. Insbesondere soll eine individuelle Einstellung nicht erforderlich sein. Insbesondere soll ein unbeabsichtigtes Verspannen von Teilen der Reibungskupplungseinrichtung vermieden sein. Insbesondere soll eine Materialschwächung durch Bohrungen vermieden sein. Insbesondere soll eine Anzahl von Einzelteilen reduziert sein. Insbesondere soll eine Anhäufung von Toleranzen vermieden sein. Insbesondere soll ein Einfluss einer Biegung von Federzungen einer Tellerfeder reduziert sein. Insbesondere soll ein Bauraumbedarf reduziert sein. Insbesondere soll eine Stützfeder entfallen. Insbesondere soll eine variabel einsetzbare Reibungskupplungseinrichtung bereit gestellt werden. Insbesondere soll eine maximale Betätigungskraft begrenzt sein. Insbesondere soll eine vorbestimmte Anpresskraft nicht unterschritten werden. Insbesondere soll eine Servofeder nur in einem Verschleißzustand wirksam sein. Insbesondere soll eine Servofeder in einem Neuzustand sowie bei einem Abhub kraftlos sein. Insbesondere soll eine Gesamttoleranz in der Reibungskupplungseinrichtung gering gehalten sein. Insbesondere soll ein Einfluss von Toleranzabweichungen auf eine Servofederkraft begrenzt sein.

Erfindungsgemäß gelöst wird diese Aufgabe durch eine Reibungskupplungseinrichtung gemäß Patentanspruch 1. Bevorzugte Ausführungsbeispiele der vorliegenden Erfindung sind in den abhängigen Ansprüchen dargelegt.

Die Lösung der Aufgabe erfolgt mit einer Reibungskupplungseinrichtung, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte und eine zweite Feder zur Reduzierung einer Betätigungskraft in einem Verschleißzustand, bei der die zweite Feder in axialer Richtung zwischen dem Gehäuse und der ersten Feder angeordnet ist.

Der Antriebsstrang kann eine Brennkraftmaschine aufweisen. Der Antriebsstrang kann einen Drehschwingungsdämpfer aufweisen. Der Antriebsstrang kann ein Getriebe aufweisen. Der Antriebsstrang kann wenigsten ein antreibbares Rad aufweisen. Die Reibungskupplungseinrichtung kann in dem Antriebsstrang anordenbar sein. Die Reibungskupplungseinrichtung kann zwischen der Brennkraftmaschine und dem Getriebe anordenbar sein. Die Reibungskupplungseinrichtung kann zwischen dem Drehschwingungsdämpfer und dem Getriebe anordenbar sein.

Die Reibungskupplungseinrichtung kann ein Eingangsteil aufweisen. Die Reibungskupplungseinrichtung kann ein Ausgangsteil aufweisen. Die Reibungskupplungseinrichtung kann ein Gehäuse aufweisen. Das Gehäuse kann auch als Deckel bezeichnet werden. Das Eingangsteil der Reibungskupplungseinrichtung kann von der Brennkraftmaschine antreibbar sein. Mithilfe des Ausgangsteils kann das Getriebe antreibbar sein. Die Reibungskupplungseinrichtung kann ein Anfahren sowie einen Wechsel einer Getriebeübersetzung ermöglichen.

Die Reibungskupplungseinrichtung kann eine Einfachkupplung aufweisen. Die Reibungskupplungseinrichtung kann eine Doppelkupplung aufweisen. Die Reibungskupplungseinrichtung kann eine trockene Kupplung aufweisen. Die Reibungskupplungseinrichtung kann eine nasse Kupplung aufweisen. Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine selbsttätig öffnende Kupplung aufweisen. Die Reibungskupplungseinrichtung kann eine selbsttätig schließende Kupplung aufweisen. Die Reibungskupplungseinrichtung kann eine gedrückte Kupplung aufweisen. Die Reibungskupplungseinrichtung kann eine gezogene Kupplung aufweisen. Die Reibungskupplungseinrichtung kann mithilfe eines Kupplungspedals betätigbar sein. Die Reibungskupplungseinrichtung kann automatisiert betätigbar sein.

Die Reibungskupplungseinrichtung kann ausgehend von einer vollständig ausgerückten Betätigungsstellung, in der zwischen dem Eingangsteil und dem Ausgangsteil im Wesentlichen keine Leistungsübertragung erfolgt, bis hin zu einer vollständig eingerückten Betätigungsstellung, in der zwischen dem Eingangsteil und dem Ausgangsteil im Wesentlichen eine vollständige Leistungsübertragung erfolgt, betätigungsabhängig eine zunehmende Leistungsübertragung ermöglichen, wobei eine Leistungsübertragung zwischen dem Eingangsteil und dem Ausgangsteil reibschlüssig erfolgen kann. Umgekehrt kann ausgehend von einer vollständig eingerückten Betätigungsstellung, in der zwischen dem Eingangsteil und dem Ausgangsteil im Wesentlichen eine vollständige Leistungsübertragung erfolgt, bis hin zu einer vollständig ausgerückten Betätigungsstellung, in der zwischen dem Eingangsteil und dem Ausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die wenigstens eine Anpressplatte und das Gehäuse können miteinander drehfest verbunden sein. Die Reibungskupplungseinrichtung kann eine Druckplatte aufweisen. Die Druckplatte und das Gehäuse können miteinander fest verbunden sein. Die Reibungskupplungseinrichtung kann eine Kupplungsscheibe mit Reibbelägen aufweisen. Die Kupplungsscheibe kann zwischen der Druckplatte und der wenigstens einen Anpressplatte einklemmbar sein. Die Reibbeläge können bei einem Betrieb der Reibungskupplungseinrichtung einem Verschleiß unterliegen. Das Eingangsteil der Reibungskupplungseinrichtung kann das Gehäuse, die Druckplatte und die wenigstens eine Anpressplatte aufweisen. Das Ausgangsteil der Reibungskupplungseinrichtung kann die Kupplungsscheibe aufweisen.

Die Reibungskupplungseinrichtung kann eine Federeinrichtung aufweisen. Die Federeinrichtung kann die erste Feder und die zweite Feder aufweisen. Die erste Feder kann auch als Kupplungsfeder oder Betätigungsfeder bezeichnet werden. Die zweite Feder kann auch als Servofeder bezeichnet werden. Die erste Feder kann in einem Diagramm, in dem auf einer x-Achse ein Betätigungsweg und auf einer y-Achse eine Betätigungskraft aufgetragen ist, eine steigende Kennlinie mit einem lokalen Maximum und einem fallenden Abschnitt aufweisen. Eine Kraft der zweiten Feder kann einer Kraft der ersten Feder entgegen gerichtet sein. Die erste Feder und die zweite Feder können in einem Diagramm, in dem auf einer x-Achse ein Betätigungsweg und auf einer y-Achse eine Betätigungskraft aufgetragen ist, eine gemeinsame Gesamtkennlinie aufweisen. Die Gesamtkennlinie kann einen steigenden Verlauf mit einem lokalen Maximum und einem fallenden Abschnitt aufweisen, wobei aufgrund der Kraft der zweiten Feder das lokale Maximum der Gesamtkennlinie einen gegenüber dem lokalen Maximum der Kennlinie der ersten Feder verringerten Wert und der fallende Abschnitt der Gesamtkennlinie eine gegenüber dem fallenden Abschnitt der Kennlinie der ersten Feder verringerte Steigung aufweist. Die Federeinrichtung kann die Anpressplatte in Schließrichtung vorgespannt beaufschlagen. Die Federeinrichtung kann die Anpressplatte in Öffnungsrichtung vorgespannt beaufschlagen.

Die erste Feder kann eine Tellerfeder mit Federzungen sein und die zweite Feder kann sich unmittelbar an den Federzungen abstützen. Die erste Feder kann einen Kraftrand und Federzungen aufweisen. Der Kraftrand kann eine ringscheibenartige Form aufweisen. Die Federzungen können sich ausgehend von dem Kraftrand nach radial innen erstrecken. Die erste Feder kann Federfenster aufweisen. Die Federfenster können jeweils in Umfangsrichtung zwischen den Federzungen und in radialer Richtung in einem Übergangsbereich zwischen den Federzungen und dem Kraftrand angeordnet sein. Die Federfenster können jeweils eine tropfenartige Form aufweisen. Die erste Feder kann eine dem Gehäuse zugewandte Seite aufweisen. Die erste Feder kann eine der Anpressplatte zugewandte Seite aufweisen. Die zweite Feder kann eine ringscheibenartige Form aufweisen. Die zweite Feder kann einen Außenrand aufweisen. Die zweite Feder kann einen Innenrand aufweisen. Die zweite Feder kann eine dem Gehäuse zugewandte Seite aufweisen. Die zweite Feder kann eine der Anpressplatte zugewandte Seite aufweisen. Die zweite Feder kann zwischen dem Gehäuse und der ersten Feder wirken. Die zweite Feder kann sich einerseits an dem Gehäuse und andererseits an der ersten Feder abstützen.

Gehäuseseitig kann eine definierte Kante oder ein Drahtring als Schwenklager für die zweite Feder dienen. Die Kante kann eine Kante des Gehäuses sein. Die Kante kann eine nach radial innen gerichtete Kante sein. Die Kante kann mit einem Gehäuseende gebildet sein. Zwischen dem Gehäuse und der zweiten Feder kann ein Zwischenelement als Schwenklager für die zweite Feder angeordnet sein. Das Zwischenelement kann ein Drahtring sein. Die zweite Feder kann sich mit ihrem Außenrand an der ersten Feder abstützen. Der Innenrand der zweiten Feder kann nach radial innen über das Schwenklager oder den Drahtring überstehen. Die zweite Feder kann im Bereich der Federfenster auf die erste Feder wirken. Ein Wirkdurchmesser zwischen der ersten Feder und der zweiten Feder kann einen vorbestimmten Mindestradius aufweisen. Der Mindestradius kann durch eine Durchbiegung der Federzungen der ersten Feder bestimmt sein. Die zweite Feder kann sich mit ihrem Innenrand an der ersten Feder abstützen.

Mit den erfindungsgemäßen Reibungskupplungseinrichtungen ist jeweils ein sicherer Betrieb über die Lebensdauer sichergestellt. Eine individuelle Einstellung ist nicht erforderlich. Ein unbeabsichtigtes Verspannen von Teilen der Reibungskupplungseinrichtung ist vermieden. Eine Materialschwächung durch Bohrungen ist vermieden. Eine Anzahl von Einzelteilen ist reduziert. Eine Anhäufung von Toleranzen ist vermieden. Ein Einfluss einer Biegung von Federzungen einer Tellerfeder ist reduziert. Ein Bauraumbedarf ist reduziert. Eine Stützfeder kann entfallen. Die Reibungskupplungseinrichtung ist variabel einsetzbar. Eine maximale Betätigungskraft ist begrenzt. Eine vorbestimmte Mindestanpresskraft ist gewährleistet. Eine Servofeder ist in einem Verschleißzustand wirksam und in einem Neuzustand sowie bei einem Abhub kraftlos. Eine Gesamttoleranz in der Reibungskupplungseinrichtung ist gering gehalten. Ein Einfluss von Toleranzabweichungen auf eine Servofederkraft ist begrenzt. Die erfindungsgemäßen Reibungskupplungseinrichtungen ermöglichen jeweils eine weitgehend konstant bleibende Anpresskraft, einen konstanten Abhub im Verschleiß, eine Reduzierung einer Pedalkraft und/oder geringe Gesamttoleranzen. Ein Einsatz der erfindungsgemäßen Reibungskupplungseinrichtungen kann bauraumneutral erfolgen.

Zusammenfassend und mit anderen Worten dargestellt ergibt sich somit durch die Erfindung unter anderem eine Servofederkupplung. Eine Servo- und Stützfeder können aus einer Platine entstehen, aber voneinander getrennt sein. Ein Drahtring kann eine Lagerung der Servofeder übernehmen. Alternativ kann auf den Drahtring verzichtet werden und die Servofeder kann direkt auf der Stützfeder aufliegen. Dazu kann die Servofeder um einige Grad verdreht werden, sodass Auflagen von Stütz- und Servofeder übereinander liegen. Aus einer Tellerfeder können an einem Kraftrand degressive Federelemente geformt werden, welche im Betrieb an Deckelanschläge anstoßen. Die Form der Federelemente kann so ausgewählt sein, dass sie bei einer Auslenkung eine Kraftkennlinie erzeugen, die der einer Tellerfeder ähnelt. In einem Deckel können degressive Blattfedern verbaut werden, welche im Betrieb an der Tellerfeder oder der Anpressplatte anstoßen. Die Form der Blattfedern kann so ausgewählt werden, dass sie bei Auslenkung eine Kraftkennlinie erzeugen, die der einer Tellerfeder ähnelt. Bolzen einer konventionellen Kupplung können so verändert werden, dass sie eine Servofeder, die unter einem unteren Drahtring einer Kupplung hindurch reicht, lagern können. Mittels Federelementen, beispielsweise Wellfedern, kann die Servofeder in eine durch den Drahtring definierte Position gebracht werden, wodurch gleichzeitig eine Spielfreiheit im Bereich einer Servofederbefestigung erreicht werden kann. Der untere Drahtring einer konventionellen Kupplung kann entfernt werden. Seine Funktion kann die Servofeder übernehmen, die beim Drahtringdurchmesser abwechselnd in beide Richtungen mit Sicken versehen sein kann. Nach unten liegende Sicken können auf den Bolzen aufliegen, nach oben liegende Sicken können die Tellerfeder stützen. Ein gewellter Drahtring, der zwischen den Bolzen bzw. Laschen bei einer Bolo-Kupplung nach unten abgesenkt sein kann, kann eine Funktion des unteren Drahtrings übernehmen. In diesem Bereich kann die Servofeder auf dem Drahtring aufliegen. Die Servofeder kann im Deckel verbaut werden, wodurch sie im Betrieb an der Tellerfeder oder der Anpressplatte anstoßen und eine Gegenkraft direkt aufbringen kann. Die Servofeder kann unterhalb der Bolzen angeordnet sein, wodurch ein längerer Kraftrand ermöglicht werden kann. Ein Bauteil, auf dem die Servofeder sich abstützt, kann wahlweise in den Bolzen oder durch Tellerfederfenster an dem Deckel befestigt werden. Für eine Abstützung zur Tellerfeder kann ein Zwischenelement vorgesehen sein, um einen zu steilen Kraftrand für direkten Kontakt zur Tellerfeder zu vermeiden.

Die Servofeder kann zwischen dem Deckel und der Tellerfeder eingebaut werden und direkt auf die Tellerfederzungen wirken. Am Deckel kann sie dabei an einer definierten Kante, wie einem Deckelende oder einem eingebauten Zwischenelement, beispielsweise einem Drahtring, abwälzen, mit einem Außendurchmesser kann sie auf der Tellerfeder aufliegen. Ein Kraftrandinnendurchmesser kann über die Kante überstehen und frei gewählt werden, insofern er nicht mit anderen Bauteilen oder Bauraumrestriktionen kollidiert. Damit eine Zungendurchbiegung keinen allzu großen Einfluss auf einen Kraftabbau hat, kann die Servofeder an einem Punkt nahe von Fenstern wirken. Generell kann mittels der Zungendurchbiegung ein Grenzdurchmesser definiert werden, den ein Kontaktpunkt zwischen Servofeder und Tellerfeder nicht unterschreitet. Eine Einbaurichtung kann variabel sein. Bei entsprechenden Platzverhältnissen in der Kupplung, beispielsweise einer Hakenkupplung, kann die Servofeder auch so eingebaut werden, dass sie an einem Innendurchmesser Kontakt zur Tellerfeder besitzt.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Kupplung mit einer zwischen einem Gehäuse und einer Tellerfeder angeordneten Servofeder in ausschnittsweiser Schnittdarstellung,
- Fig. 2: eine nicht-erfindungsgemäße Kupplung mit einer Servofeder, die sich mit ihrem Innenrand an einer Tellerfeder abstützt, in ausschnittsweiser Schnittdarstellung,
- Fig. 3: eine Servofeder und eine Stützfeder, die mithilfe eines Drahtrings miteinander schwenklagernd verbunden sind in Draufsicht und in perspektivischer Detailansicht,
- Fig. 4: eine Servofeder und eine Stützfeder, die mithilfe laschenartiger Auflageabschnitte gegenseitig schwenklagernden verbunden sind,
- Fig. 5: eine Tellerfeder mit radial außen angeordneten Federelementen zur Darstellung einer Servofeder in Draufsicht und in perspektivischer Ausschnittsansicht,
- Fig. 6: eine nicht-erfindungsgemäße Kupplung mit an einem Gehäuse angeordneten Federelementen zur Darstellung einer Servofeder in schematischer Darstellung und in perspektivischer Ausschnittsansicht,
- Fig. 7: eine nicht-erfindungsgemäße Kupplung mit einer Servofeder, die anpressplattenseitig eines Drahtrings an Distanzbolzen gelagert ist, in ausschnittsweiser Schnittdarstellung und die Servofeder in Detailansicht,
- Fig. 8: eine nicht-erfindungsgemäße Kupplung mit einer Servofeder mit Sicken in ausschnittsweiser Schnittdarstellung und die Servofeder in Detailansicht,
- Fig. 9: eine nicht-erfindungsgemäße Kupplung mit einem gewellten Drahtring zur Lagerung sowohl einer Tellerfeder als auch einer Servofeder in ausschnittsweiser Schnittdarstellung und in Detailansicht,
- Fig. 10: eine nicht-erfindungsgemäße Kupplung mit einer Servofeder, die unmittelbar an einem Gehäuse angeordnet ist, in ausschnittsweiser Schnittdarstellung
- Fig. 11: eine nicht-erfindungsgemäße Kupplung mit einer anpressplattenseitig von Distanzbolzen angeordneten Servofeder in ausschnittsweiser Schnittdarstellung, und
- Fig. 12: Diagramme zum Verlauf der Anpresskraft und der Ausrückkraft durch eine bevorzugte Auslegung der in einer der Figuren 1 bis 11 dargestellten Servofeder.

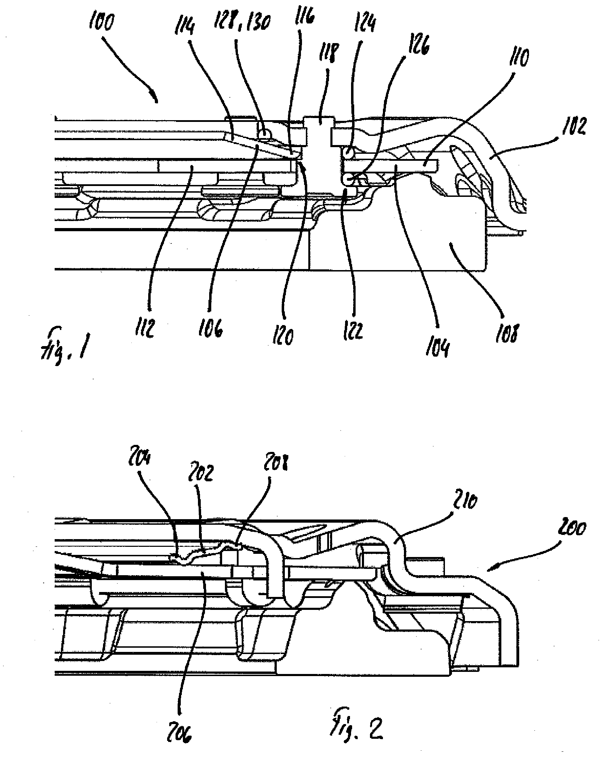

Fig. 1 zeigt eine Kupplung 100 mit einer zwischen einem Gehäuse 102 und einer Tellerfeder 104 angeordneten Servofeder 106 in ausschnittsweiser Schnittdarstellung. Die Kupplung 100 ist eine Reibungskupplung. Die Kupplung 100 ist eine Einscheiben-Trocken-Kupplung. Die Kupplung 100 ist in einem Antriebsstrang eines Kraftfahrzeugs zwischen einer Brennkraftmaschine und einem Getriebe anordenbar. Zwischen der Brennkraftmaschine und der Kupplung 100 kann ein Drehschwingungsdämpfer, insbesondere ein Zweimassenschwungrad, angeordnet sein. Die Kupplung 100 weist ein Eingangsteil und ein Ausgangsteil auf. Das Eingangsteil weist das Gehäuse 102, eine Druckplatte, die mit dem Gehäuse 102 fest verbunden ist, und eine axial relativ zu dem Gehäuse begrenzt verlagerbare Anpressplatte 108 auf. Das Eingangsteil ist mit einer Brennkraftmaschine antriebsverbindbar. Das Ausgangsteil weist eine Kupplungsscheibe mit Reibbelägen auf. Die Kupplungsscheibe ist zwischen der Druckplatte und der Anpressplatte 108 einklemmbar, um eine reibschlüssige Leistungsübertragung zwischen dem Eingangsteil und dem Ausgangsteil zu bewirken. Das Ausgangsteil ist mit dem Getriebe antriebsverbindbar. Die Kupplung 100 weist eine Betätigungseinrichtung auf. Mithilfe der Betätigungseinrichtung ist die Anpressplatte 108 verlagerbar.

Die Betätigungseinrichtung weist die Tellerfeder 104 und die Servofeder 106 auf. Mithilfe einer Kraft der Tellerfeder 104 ist die Anpressplatte 108 in Schließrichtung vorgespannt beaufschlagt. Mithilfe der Betätigungseinrichtung kann eine Betätigungskraft zum Öffnen der Kupplung 100 aufgebracht werden. Eine Betätigungskraft ist der Kraft der Tellerfeder 104 entgegen gerichtet. Die Servofeder 106 ist abhängig von einem Verschleiß der Kupplung 100, insbesondere der Reibbeläge der Kupplungsscheibe, wirksam. Eine Kraft der Servofeder 106 ist der Kraft der Tellerfeder 104 entgegen gerichtet. Die Kraft der Servofeder 106 unterstützt damit verschleißabhängig eine Betätigung der Kupplung 100 in Öffnungsrichtung. Die Servofeder 106 stützt sich einerseits an dem Gehäuse 102 und andererseits an der Tellerfeder 104 oder an der Anpressplatte 108 ab.

Die Tellerfeder 104 weist einen Kraftrand 110 und Federzungen 112 auf. Der Kraftrand 110 weist eine ringscheibenartige Form mit einem Außenrand auf. Die Federzungen 112 erstrecken sich ausgehend von dem Kraftrand 110 nach radial innen. Zwischen den Federzungen 112 sind jeweils Zwischenräume vorhanden, die zu dem Kraftrand 110 hin erweitert sind. Die erweiterten Abschnitte der Zwischenräume werden auch als Federfenster bezeichnet. Die Servofeder 106 weist eine ringscheibenartige Form mit einem Innenrand 114 und einem Außenrand 116 auf.

Die Tellerfeder 104 stützt sich mit ihrem Kraftrand 110 an der Anpressplatte 108 ab. Die Tellerfeder 104 ist an dem Gehäuse 102 verschwenkbar gelagert, d.h. mittels einer Schwenklagerung verkippbar abgestützt. Zur Lagerung der Tellerfeder 104 an dem Gehäuse 102 dienen Distanzbolzen 118. Die Distanzbolzen 118 weisen jeweils einen mehrfach gestuften Querschnitt mit einer ersten Stufe 120 und einer zweiten Stufe 122 auf. Die Distanzbolzen 118 weisen jeweils an der zweiten Stufe 122 einen größeren Querschnitt als an der ersten Stufe 120 auf. Die Distanzbolzen 118 sind jeweils an dem Gehäuse 102 befestigt und erstrecken sich nach innen in Richtung der Anpressplatte 108. Zur verschwenkbaren Lagerung der Tellerfeder 104 ist ein erster Drahtring 124 zwischen dem Gehäuse 102 und der Tellerfeder 104 und ein zweiter Drahtring 126 anpressplattenseitig der Tellerfeder 104 angeordnet. Der zweite Drahtring 126 liegt auf der zweiten Stufe 122 der Distanzbolzen 118 auf. Der erste Drahtring 124 und der zweite Drahtring 126 liegen radial außenseitig an den Distanzbolzen 118 an.

Die Servofeder 106 ist an dem Gehäuse 102 verschwenkbar gelagert. Zur verschwenkbaren Lagerung der Servofeder 106 dient eine Kante 128 des Gehäuses 102 oder ein Drahtring 130. Die Servofeder 106 stützt sich mit ihrem Außenrand 116 an der Tellerfeder 104 ab. Der Außenrand 116 ist verrundet ausgeführt, um ein Abwälzen zu unterstützen. Der Innenrand 114 der Servofeder 106 steht in axialer Richtung über die Kante 128 bzw. den Drahtring 130 in Richtung des Gehäuses 102 über. Die Servofeder 106 stützt sich an der Tellerfeder 104 im Bereich der Federfenster radial innenseitig der Distanzbolzen 118 ab. Mithilfe der ersten Stufen 120 der Distanzbolzen 118 ist ein Freiraum für die Servofeder 106 gebildet. Weiterhin stützt sich die, vorzugsweise ringförmige, vorzugsweise einen konischen Oberflächenabschnitt aufweisende, Servofeder 106 auf einem ersten Durchmesser am Gehäuse 102 unmittelbar oder mittelbar ab und auf einem zweiten Durchmesser an der Tellerfeder 104 unmittelbar oder mittelbar ab. Dabei ist der erste Durchmesser kleiner als der zweite Durchmesser. Ferner ist die Servofeder 106 in axialer Richtung zwischen dem Gehäuse 102 und der Tellerfeder 104 angeordnet. Die mittelbare Abstützung der Servofeder 106 am Gehäuse 102 und/oder an der Tellerfeder 104 kann durch zumindest einen Drahtring 130 erfolgen. Ebenso kann die unmittelbare Abstützung der Servofeder 106 am Gehäuse 102 und/oder an der Tellerfeder 104 durch zumindest eine gehäuseseitige und/oder federseitige Verrundung oder Sicke erfolgen.

Die Servofeder 106 stützt sich im Bereich der Federzungen 112 an der Tellerfeder 104 ab. Der zweite Durchmesser, in dem die tellerfederseitige Abstützung erfolgt, ist radial innerhalb der Schwenklagerung 118, 124, 126 angeordnet. Ferner erstreckt sich die Servofeder 106 radial weiter nach innen als die Innenkante 128 der Öffnung des Gehäuses 102.

Anstelle der Tellerfeder 104 einer normal-eingerückten Kupplung 100 kann auch eine Hebelfeder bei einer nicht dargestellten, normal-ausgerückten Kupplung vorgesehen sein. Die Servofeder 106 ist insbesondere ringförmig und kann als Tellerfeder ausgebildet sein.

Fig. 2 zeigt eine nicht-erfindungsgemäße Kupplung 200 mit einer Servofeder 202, die sich mit ihrem Innenrand 204 an einer Tellerfeder 206 abstützt, in ausschnittsweiser Schnittdarstellung. Die Abstützung kann auch über eine oder mehrere Sicken/Prägungen in der Nähe des Innenrands 204 und/oder Außenrands 208 erfolgen, muss also nicht direkt an der Kante des Innenrands 204 oder des Außenrands 208 erfolgen. Mit ihrem Außenrand 208 stützt sich die Servofeder 202 an dem Gehäuse 210 ab. Die Servofeder 202 weist einen gewellten Querschnitt auf. Damit sind eine Auflage für ein Gehäuse 210 und eine Auflage für die Tellerfeder 206 gebildet. Im Übrigen wird ergänzend insbesondere auf Fig. 1 und die zugehörige Beschreibung verwiesen.

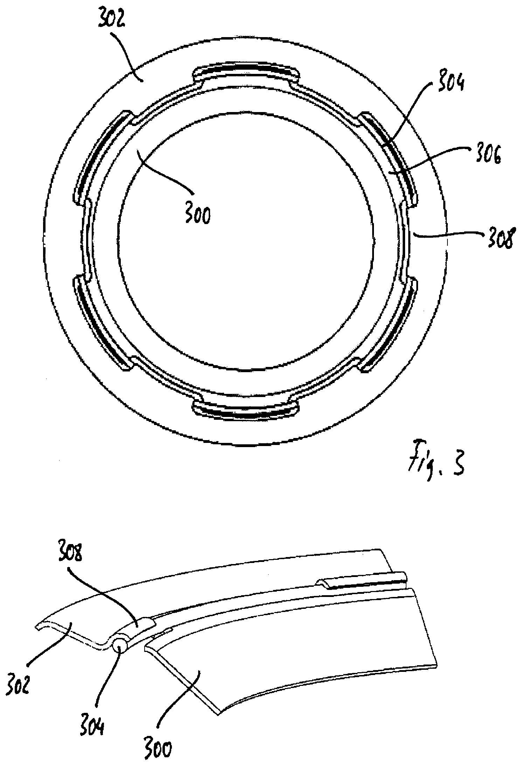

Fig. 3 zeigt eine Stützfeder 300 und eine Servofeder 302, die mithilfe eines Drahtrings 304 miteinander schwenklagernd verbunden sind in Draufsicht und in perspektivischer Detailansicht. Die vorgenannte Tellerfeder liegt auf der Servofeder 302 auf, während die Stützfeder 300 gehäuseseitig abgestützt ist, beispielsweise an deckelseitigen Laschen oder Distanzbolzen. Die Stützfeder 300 und die Servofeder 302 sind aus demselben Blech hergestellt, beispielsweise in einem Stanzverfahren. Ein Außendurchmesser der Stützfeder 300 entspricht in etwa einem Innendurchmesser der Servofeder 302. Die Stützfeder 300 ist radial innerhalb der Servofeder 302 angeordnet. Die Stützfeder 300 weist nach radial außen gerichtete Fortsätze 306 auf. Die Servofeder 302 soll bei der Auslegung der Stützfeder 300 berücksichtigt werden. Die Servofeder 302 weist nach radial innen gerichtete Fortsätze 308 auf. Der Drahtring 304 ist radial zwischen der Stützfeder 300 und der Servofeder 302 angeordnet. Die Fortsätze 306, 308 sind jeweils dem Drahtring 304 angepasst umgeformt. Die Fortsätze 306 der Stützfeder 300 und die Fortsätze 308 der Servofeder 302 umgreifen den Drahtring 304 jeweils wechselseitig. Im Übrigen wird ergänzend insbesondere auf Fig. 1 und die zugehörige Beschreibung verwiesen.

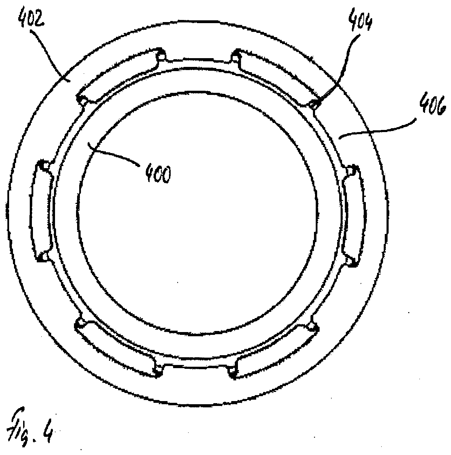

Fig. 4 zeigt eine Stützfeder 400 und eine Servofeder 402, die mithilfe laschenartiger Auflageabschnitte 404, 406 gegenseitig schwenklagernden verbunden sind. Die Auflageabschnitte 404 der Stützfeder 400 liegen auf dem Innenrand der Servofeder 402 auf. Die Auflageabschnitte 406 der Servofeder 402 liegen auf dem Außenrand der Stützfeder 400 auf. Die Auflageabschnitte 404 der Stützfeder 400 und die Auflageabschnitte 406 der Servofeder 402 liegen jeweils wechselseitig auf. Die Auflageabschnitte 404, 406 sind jeweils mithilfe umgeformter Laschen gebildet. Im Übrigen wird ergänzend insbesondere auf Fig. 1 und Fig. 3 sowie die zugehörige Beschreibung verwiesen.

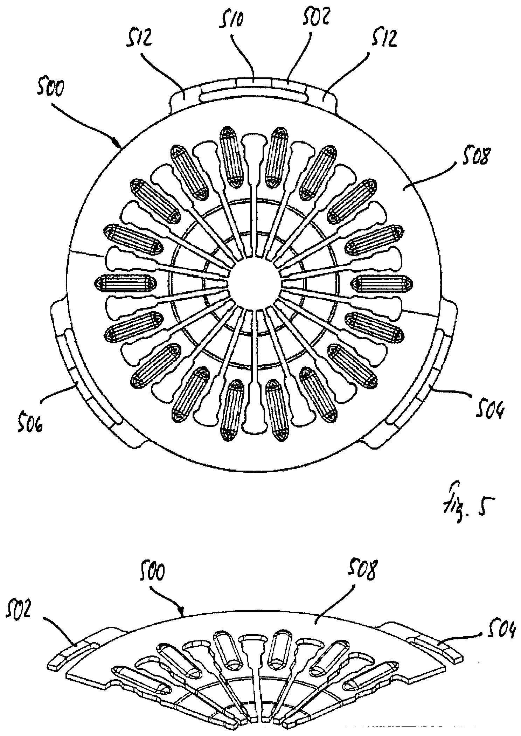

Fig. 5 zeigt eine Tellerfeder 500 mit radial außen angeordneten Federelementen 502, 504, 506 zur Darstellung einer Servofeder in Draufsicht und in perspektivischer Ausschnittsansicht. Die Tellerfeder 500 weist vorliegend drei Federelemente 502, 504, 506 auf. Die Federelemente 502, 504, 506 sind radial außen an einem Kraftrand 508 der Tellerfeder 500 angeordnet. Die Federelemente 502 weisen jeweils eine bügelartige Form mit einem Federabschnitt 510 und zwei Anschlussabschnitten 512 auf. In einem Verschleißzustand stützen sich die Federelemente 502, 504, 506 bei einer Betätigung der Kupplung an Anschlagabschnitten eines Gehäuses ab. Die Federelemente 502, 504, 506 weisen eine degressive Kennlinie auf. Die Federelemente 502, 504, 506 weisen eine Kennlinie auf, die einer Kennlinie einer Tellerfeder ähnlich ist. Im Übrigen wird ergänzend insbesondere auf Fig. 1 und die zugehörige Beschreibung verwiesen.

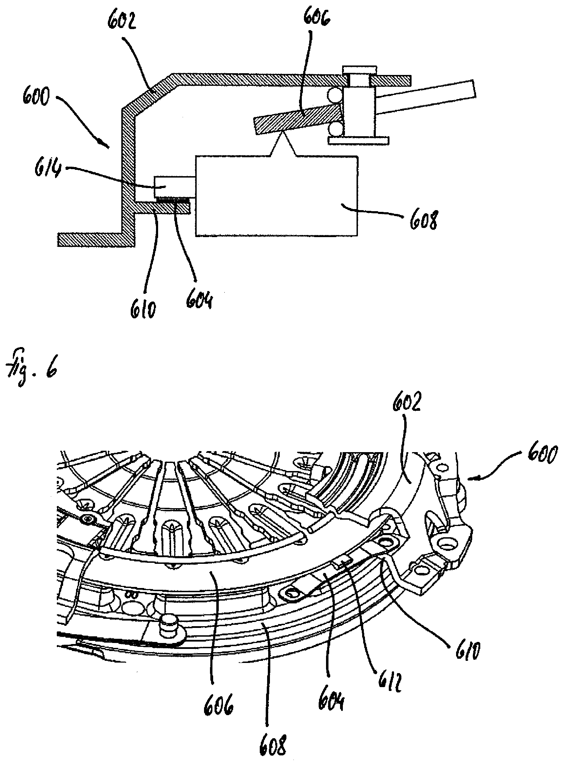

Fig. 6 zeigt eine nicht-erfindungsgemäße Kupplung 600 mit an einem Gehäuse 602 angeordneten Federelementen 604 zur Darstellung einer Servofeder in schematischer Darstellung und in perspektivischer Ausschnittsansicht. Die Federelemente 604 sind als Blattfedern ausgebildet. In einem Verschleißzustand stützen sich die Federelemente 604 bei einer Betätigung der Kupplung 600 jeweils an eine Tellerfeder 606 oder an einer Anpressplatte 608 ab. Zur Anordnung der Federelemente 604 weist das Gehäuse 602 Aufnahmeabschnitte 610 auf. Wenn vorgesehen ist, dass sich die Federelemente 604 bei einer Betätigung der Kupplung 600 in einem Verschleißzustand an der Tellerfeder 606 abstützen, weist die Tellerfeder 606 Anlageabschnitte 612 zur Abstützung der Federelemente 604 auf. Die Anlageabschnitte 612 sind an der Tellerfeder 606 radial außen angeordnet. Wenn vorgesehen ist, dass sich die Federelemente 604 bei einer Betätigung der Kupplung 600 in einem Verschleißzustand an der Anpressplatte 608 abstützen, weist die Anpressplatte 608 Anlageabschnitte 614 zur Abstützung der Federelemente 604 auf. Die Anlageabschnitte 614 sind an der Anpressplatte 608 radial außen angeordnet. Die Federelemente 604 weisen eine degressive Kennlinie auf. Die Federelemente 604 weisen eine Kennlinie auf, die einer Kennlinie einer Tellerfeder ähnlich ist. Im Übrigen wird ergänzend insbesondere auf Fig. 1 und die zugehörige Beschreibung verwiesen.

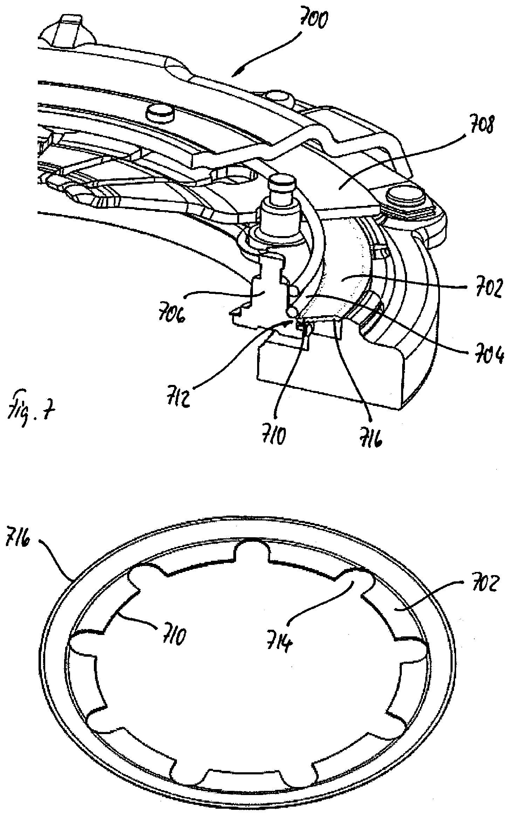

Fig. 7 zeigt eine nicht-erfindungsgemäße Kupplung 700 mit einer Servofeder 702, die anpressplattenseitig eines Drahtrings 704 an Distanzbolzen 706 gelagert ist, in ausschnittsweiser Schnittdarstellung und die Servofeder 702 in Detailansicht. Mittels an den Distanzbolzen gelagerten Federelementen, beispielsweise Wellenfedern, wird die Servofeder 702 in eine definierte Position gebracht. Die Servofeder 702 ist anpressplattenseitig des Drahtrings 704 angeordnet, der seinerseits anpressplattenseitig einer Tellerfeder 708 angeordnet ist. Die Servofeder 702 stützt sich mit ihrem Innenrand 710 an Stufen 712 der Distanzbolzen 706 ab. Dazu weist die Servofeder 702 an ihrem Innenrand 710 Ausnehmungen 714 auf, die dem Abstützdurchmesser der Distanzbolzen 706 entsprechen. Der Drahtring 704 dient auch zur definierten und spielfreien Positionierung der Servofeder 702. Der Außenrand 716 der Servofeder 702 ist zur verschwenkbaren Anlage der Tellerfeder 708 verrundet ausgeführt. Im Übrigen wird ergänzend insbesondere auf Fig. 1 und die zugehörige Beschreibung verwiesen.

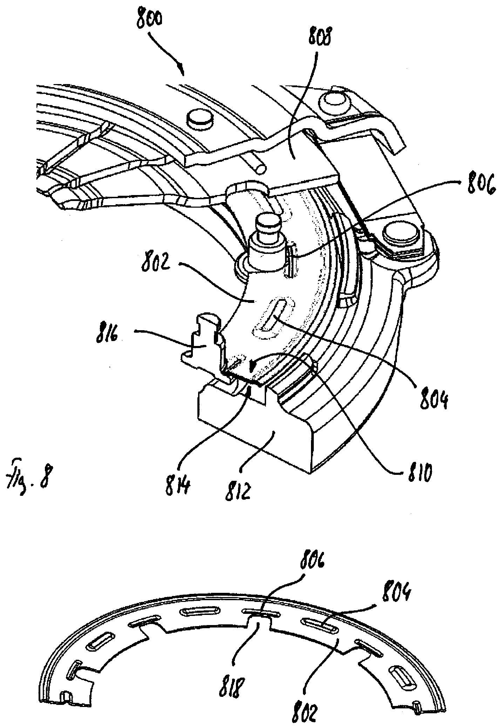

Fig. 8 zeigt eine nicht-erfindungsgemäße Kupplung 800 mit einer Servofeder 802 mit Sicken 804, 806 in ausschnittsweiser Schnittdarstellung und die Servofeder 800 in Detailansicht. Die Servofeder 802 weist eine einer Tellerfeder 808 zugewandte Oberfläche 810 auf. Die Sicken 804 erheben sich über die Oberfläche 810. Die Sicken 804 bilden eine Auflage für die Tellerfeder 808. Die Servofeder 802 weist eine einer Anpressplatte 812 zugewandte Oberfläche 814 auf. Die Sicken 806 erheben sich über die Oberfläche 814. Mit den Sicken 806 liegt die Servofeder 800 auf Distanzbolzen 816 auf. Die Sicken 804 und die Sicken 806 sind in Umfangsrichtung jeweils abwechselnd angeordnet. Die Sicken 804 sind in Umfangsrichtung zwischen Ausnehmungen 818 angeordnet. Die Sicken 806 sind in Umfangsrichtung an den Ausnehmungen 818 angeordnet. Die Sicken 804, 806 sind radial außerhalb der Ausnehmungen 818 angeordnet. Im Übrigen wird ergänzend insbesondere auf Fig. 1 und Fig. 7 sowie die zugehörige Beschreibung verwiesen.

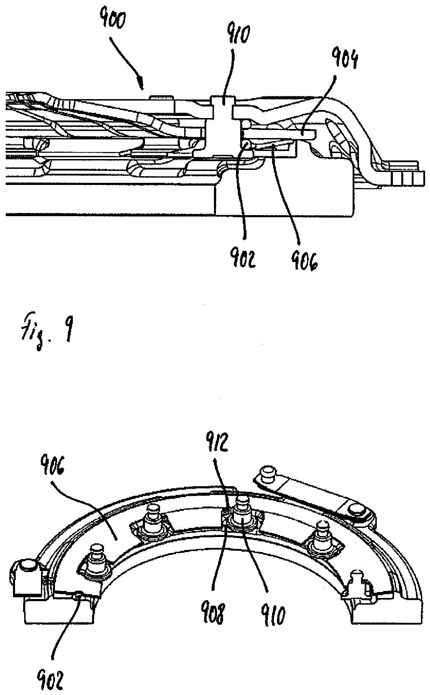

Fig. 9 zeigt eine nicht-erfindungsgemäße Kupplung 900 mit einem gewellten Drahtring 902 zur Lagerung sowohl einer Tellerfeder 904 als auch einer Servofeder 906 in ausschnittsweiser Schnittdarstellung und in Detailansicht. Der Drahtring 902 ist anpressplattenseitig der Servofeder 906 angeordnet. Die Servofeder 906 weist radial innenseitig Ausnehmungen 908 für Distanzbolzen 910 auf. Die Ausnehmungen 908 sind jeweils größer als ein maximaler Querschnitt der Distanzbolzen 910. Der Drahtring 902 weist in Richtung der Tellerfeder 904 gewellte Abschnitte 912 auf, die durch die Ausnehmungen 908 hindurch zur Tellerfeder 904 ragen. Die Abschnitte 912 liegen an einer Stufe der Distanzbolzen 910 auf. Der Drahtring 902 dient somit zur Lagerung sowohl der Servofeder 906 als auch der Tellerfeder 904. Im Übrigen wird ergänzend insbesondere auf Fig. 1 und die zugehörige Beschreibung verwiesen.

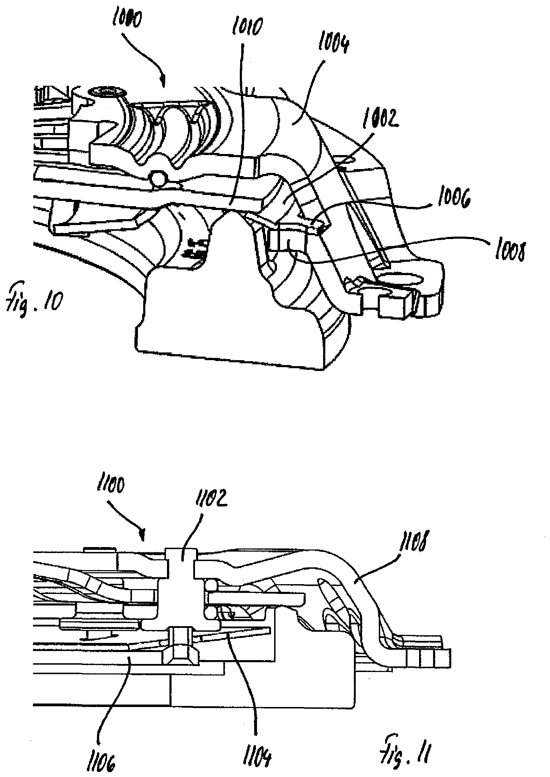

Fig. 10 zeigt eine nicht-erfindungsgemäße Kupplung 1000 mit einer Servofeder 1002, die unmittelbar an einem Gehäuse 1004 angeordnet ist, in ausschnittsweiser Schnittdarstellung. Die Servofeder 1002 weist an ihrem Außenrand Fortsätze 1006 auf, die in korrespondierende Ausnehmungen des Gehäuses 1004 eingreifen und sich an Auflageabschnitten 1008 des Gehäuses 1004 abstützen. Ein Innenrand der Servofeder 1002 stützt sich in einem Verschleißzustand bei einer Betätigung der Kupplung 1000 an einem Kraftrand einer Tellerfeder 1010 ab. Im Übrigen wird ergänzend insbesondere auf Fig. 1 und die zugehörige Beschreibung verwiesen..

Fig. 11 zeigt eine nicht-erfindungsgemäße Kupplung 1100 mit einer anpressplattenseitig von Distanzbolzen 1102 angeordneten Servofeder 1104 in ausschnittsweiser Schnittdarstellung. Die Servofeder 1104 ist mithilfe eines Halteelements 1106 gelagert. Das Halteelement 1106 ist mit den Distanzbolzen 1102 und damit mit einem Gehäuse 1108 verbunden. Die Servofeder 1104 weist einen verlängerten Kraftrand auf. Im Übrigen wird ergänzend insbesondere auf Fig. 1 und die zugehörige Beschreibung verwiesen.

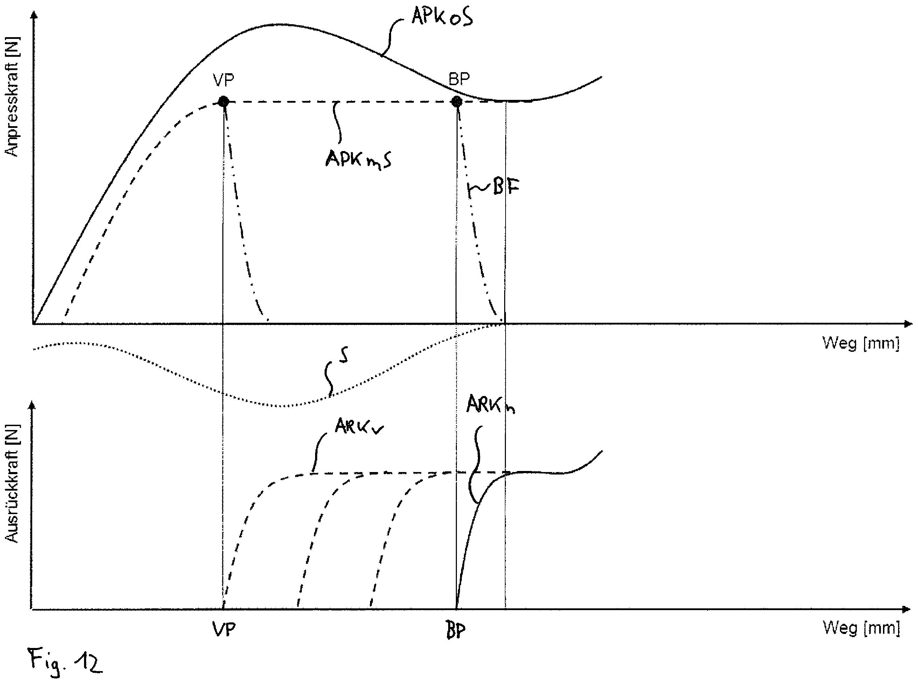

In Fig. 12 sind Diagramme zum Verlauf der Anpresskraft (oben) und der Ausrücckraft (unten) durch eine bevorzugte Auslegung einer der in den vorangegangenen Ausführungsbeispielen beschriebenen Servofeder 106, 202, 302, 402, 702, 802, 906, 1002, 1104, bzw. der entsprechenden Federelemente 502, 504, 506, 604 dargestellt.

Mit dem Bezugszeichen APKoS ist die Anpresskraftkennlinie ohne Servofeder dargestellt. Wenn Kupplungsverschleiß vorliegt, das heißt wenn sich die Anpressplatte weiter auf die Gegendruckplatte zubewegen muss, um die dünner werdenden Reibbeläge der Kupplungsscheibe reibschlüssig zu klemmen, steigt die Kennlinie APKoS an, da man sich im Diagramm vom Betriebspunkt BP ausgehend nach links bewegt.

Mit dem Bezugszeichen APKmS ist die Anpresskraftkennlinie mit Servofeder dargestellt, während mit dem Bezugszeichen S die Servofederkennlinie dargestellt ist. Das Bezugszeichen BF stellt die Kennlinie der Belagfederung der Kupplungsascheibe dar. Die Servofederkennlinie S ist derart ausgebildet, dass die Kennlinie APKmS sowie auch die entsprechenden Ausrückkraftkennlinien ARKn, ARKv im Neuzustand und im Verschleißzustand im Wesentlichen plateauförmig, ggf. leicht ansteigend oder abfallend, ausgebildet sind, das heißt zwischen dem Betriebspunkt BP im Neuzustand der Kupplung und dem Verschleißpunkt VP im Verschleißzustand der Kupplung auf einem konstanten, das heißt im Wesentlichen gleichbleibenden Kraftniveau verlaufen.

Die Servofeder ist in den vorangegangenen Ausführungsbeispielen vorzugsweise ausgebildet, im Minimum der von der Tellerfeder erzeugten Anpresskraft, das heißt im Minimum der Kennlinie APKoS anzugreifen. Die Servofeder wirkt der Tellerfeder entgegen und sorgt durch ihre bevorzugte Ausbildung dafür, dass die Kennlinie APKmS zwischen dem Betriebspunkt BP und dem Verschleißpunkt VP nicht unter dieses Minimum fällt. Somit lässt sich über die Lebensdauer der Kupplung z.B. am Kupplungspedal oder am Kupplungsaktor ein gleichbleibendes Kraftniveau erzeugen, da sich lediglich der Ausrückweg verlängert, die Ausrückkraft aber konstant bleibt.

Die Tellerfeder 104 weist einen Kraftrand 110 und Federzungen 112 auf. Der Kraftrand 110 weist eine ringscheibenartige Form mit einem Außenrand auf. Die Federzungen 112 erstrecken sich ausgehend von dem Kraftrand 110 nach radial innen. Zwischen den Federzungen 112 sind jeweils Zwischenräume vorhanden, die zu dem Kraftrand 110 hin erweitert sind. Die erweiterten Abschnitte der Zwischenräume werden auch als Federfenster bezeichnet. Die Servofeder 106 weist eine ringscheibenartige Form mit einem Innenrand 114 und einem Außenrand 116 auf.

Die Tellerfeder 104 stützt sich mit ihrem Kraftrand 110 an der Anpressplatte 108 ab. Die Tellerfeder 104 ist an dem Gehäuse 102 verschwenkbar gelagert, d.h. mittels einer Schwenklagerung verkippbar abgestützt. Zur Lagerung der Tellerfeder 104 an dem Gehäuse 102 dienen Distanzbolzen 118. Die Distanzbolzen 118 weisen jeweils einen mehrfach gestuften Querschnitt mit einer ersten Stufe 120 und einer zweiten Stufe 122 auf. Die Distanzbolzen 118 weisen jeweils an der zweiten Stufe 122 einen größeren Querschnitt als an der ersten Stufe 120 auf. Die Distanzbolzen 118 sind jeweils an dem Gehäuse 102 befestigt und erstrecken sich nach innen in Richtung der Anpressplatte 108. Zur verschwenkbaren Lagerung der Tellerfeder 104 ist ein erster Drahtring 124 zwischen dem Gehäuse 102 und der Tellerfeder 104 und ein zweiter Drahtring 126 anpressplattenseitig der Tellerfeder 104 angeordnet. Der zweite Drahtring 126 liegt auf der zweiten Stufe 122 der Distanzbolzen 118 auf. Der erste Drahtring 124 und der zweite Drahtring 126 liegen radial außenseitig an den Distanzbolzen 118 an.

Die Servofeder 106 ist an dem Gehäuse 102 verschwenkbar gelagert. Zur verschwenkbaren Lagerung der Servofeder 106 dient eine Kante 128 des Gehäuses 102 oder ein Drahtring 130. Die Servofeder 106 stützt sich mit ihrem Außenrand 116 an der Tellerfeder 104 ab. Der Außenrand 116 ist verrundet ausgeführt, um ein Abwälzen zu unterstützen. Der Innenrand 114 der Servofeder 106 steht in axialer Richtung über die Kante 128 bzw. den Drahtring 130 in Richtung des Gehäuses 102 über. Die Servofeder 106 stützt sich an der Tellerfeder 104 im Bereich der Federfenster radial innenseitig der Distanzbolzen 118 ab. Mithilfe der ersten Stufen 120 der Distanzbolzen 118 ist ein Freiraum für die Servofeder 106 gebildet. Weiterhin stützt sich die, vorzugsweise ringförmige, vorzugsweise einen konischen Oberflächenabschnitt aufweisende, Servofeder 106 auf einem ersten Durchmesser am Gehäuse 102 unmittelbar oder mittelbar ab und auf einem zweiten Durchmesser an der Tellerfeder 104 unmittelbar oder mittelbar ab. Dabei ist der erste Durchmesser kleiner als der zweite Durchmesser. Ferner ist die Servofeder 106 in axialer Richtung zwischen dem Gehäuse 102 und der Tellerfeder 104 angeordnet. Die mittelbare Abstützung der Servofeder 106 am Gehäuse 102 und/oder an der Tellerfeder 104 kann durch zumindest einen Drahtring 130 erfolgen. Ebenso kann die unmittelbare Abstützung der Servofeder 106 am Gehäuse 102 und/oder an der Tellerfeder 104 durch zumindest eine gehäuseseitige und/oder federseitige Verrundung oder Sicke erfolgen.

Die Servofeder 106 stützt sich im Bereich der Federzungen 112 an der Tellerfeder 104 ab. Der zweite Durchmesser, in dem die tellerfederseitige Abstützung erfolgt, ist radial innerhalb der Schwenklagerung 118, 124, 126 angeordnet. Ferner erstreckt sich die Servofeder 106 radial weiter nach innen als die Innenkante 128 der Öffnung des Gehäuses 102.

Anstelle der Tellerfeder 104 einer normal-eingerückten Kupplung 100 kann auch eine Hebelfeder bei einer nicht dargestellten, normal-ausgerückten Kupplung vorgesehen sein. Die Servofeder 106 ist insbesondere ringförmig und kann als Tellerfeder ausgebildet sein.

Fig. 2 zeigt eine Kupplung 200 mit einer Servofeder 202, die sich mit ihrem Innenrand 204 an einer Tellerfeder 206 abstützt, in ausschnittsweiser Schnittdarstellung. Die Abstützung kann auch über eine oder mehrere Sicken/Prägungen in der Nähe des Innenrands 204 und/oder Außenrands 208 erfolgen, muss also nicht direkt an der Kante des Innenrands 204 oder des Außenrands 208 erfolgen. Mit ihrem Außenrand 208 stützt sich die Servofeder 202 an dem Gehäuse 210 ab. Die Servofeder 202 weist einen gewellten Querschnitt auf. Damit sind eine Auflage für ein Gehäuse 210 und eine Auflage für die Tellerfeder 206 gebildet. Im Übrigen wird ergänzend insbesondere auf Fig. 1 und die zugehörige Beschreibung verwiesen.

Fig. 3 zeigt eine Stützfeder 300 und eine Servofeder 302, die mithilfe eines Drahtrings 304 miteinander schwenklagernd verbunden sind in Draufsicht und in perspektivischer Detailansicht. Die vorgenannte Tellerfeder liegt auf der Servofeder 302 auf, während die Stützfeder 300 gehäuseseitig abgestützt ist, beispielsweise an deckelseitigen Laschen oder Distanzbolzen. Die Stützfeder 300 und die Servofeder 302 sind aus demselben Blech hergestellt, beispielsweise in einem Stanzverfahren. Ein Außendurchmesser der Stützfeder 300 entspricht in etwa einem Innendurchmesser der Servofeder 302. Die Stützfeder 300 ist radial innerhalb der Servofeder 302 angeordnet. Die Stützfeder 300 weist nach radial außen gerichtete Fortsätze 306 auf. Die Servofeder 302 soll bei der Auslegung der Stützfeder 300 berücksichtigt werden. Die Servofeder 302 weist nach radial innen gerichtete Fortsätze 308 auf. Der Drahtring 304 ist radial zwischen der Stützfeder 300 und der Servofeder 302 angeordnet. Die Fortsätze 306, 308 sind jeweils dem Drahtring 304 angepasst umgeformt. Die Fortsätze 306 der Stützfeder 300 und die Fortsätze 308 der Servofeder 302 umgreifen den Drahtring 304 jeweils wechselseitig. Im Übrigen wird ergänzend insbesondere auf Fig. 1 und die zugehörige Beschreibung verwiesen.

Fig. 4 zeigt eine Stützfeder 400 und eine Servofeder 402, die mithilfe laschenartiger Auflageabschnitte 404, 406 gegenseitig schwenklagernden verbunden sind. Die Auflageabschnitte 404 der Stützfeder 400 liegen auf dem Innenrand der Servofeder 402 auf. Die Auflageabschnitte 406 der Servofeder 402 liegen auf dem Außenrand der Stützfeder 400 auf. Die Auflageabschnitte 404 der Stützfeder 400 und die Auflageabschnitte 406 der Servofeder 402 liegen jeweils wechselseitig auf. Die Auflageabschnitte 404, 406 sind jeweils mithilfe umgeformter Laschen gebildet. Im Übrigen wird ergänzend insbesondere auf Fig. 1 und Fig. 3 sowie die zugehörige Beschreibung verwiesen.

Fig. 5 zeigt eine Tellerfeder 500 mit radial außen angeordneten Federelementen 502, 504, 506 zur Darstellung einer Servofeder in Draufsicht und in perspektivischer Ausschnittsansicht. Die Tellerfeder 500 weist vorliegend drei Federelemente 502, 504, 506 auf. Die Federelemente 502, 504, 506 sind radial außen an einem Kraftrand 508 der Tellerfeder 500 angeordnet. Die Federelemente 502 weisen jeweils eine bügelartige Form mit einem Federabschnitt 510 und zwei Anschlussabschnitten 512 auf. In einem Verschleißzustand stützen sich die Federelemente 502, 504, 506 bei einer Betätigung der Kupplung an Anschlagabschnitten eines Gehäuses ab. Die Federelemente 502, 504, 506 weisen eine degressive Kennlinie auf. Die Federelemente 502, 504, 506 weisen eine Kennlinie auf, die einer Kennlinie einer Tellerfeder ähnlich ist. Im Übrigen wird ergänzend insbesondere auf Fig. 1 und die zugehörige Beschreibung verwiesen.

Fig. 6 zeigt eine Kupplung 600 mit an einem Gehäuse 602 angeordneten Federelementen 604 zur Darstellung einer Servofeder in schematischer Darstellung und in perspektivischer Ausschnittsansicht. Die Federelemente 604 sind als Blattfedern ausgebildet. In einem Verschleißzustand stützen sich die Federelemente 604 bei einer Betätigung der Kupplung 600 jeweils an eine Tellerfeder 606 oder an einer Anpressplatte 608 ab. Zur Anordnung der Federelemente 604 weist das Gehäuse 602 Aufnahmeabschnitte 610 auf. Wenn vorgesehen ist, dass sich die Federelemente 604 bei einer Betätigung der Kupplung 600 in einem Verschleißzustand an der Tellerfeder 606 abstützen, weist die Tellerfeder 606 Anlageabschnitte 612 zur Abstützung der Federelemente 604 auf. Die Anlageabschnitte 612 sind an der Tellerfeder 606 radial außen angeordnet. Wenn vorgesehen ist, dass sich die Federelemente 604 bei einer Betätigung der Kupplung 600 in einem Verschleißzustand an der Anpressplatte 608 abstützen, weist die Anpressplatte 608 Anlageabschnitte 614 zur Abstützung der Federelemente 604 auf. Die Anlageabschnitte 614 sind an der Anpressplatte 608 radial außen angeordnet. Die Federelemente 604 weisen eine degressive Kennlinie auf. Die Federelemente 604 weisen eine Kennlinie auf, die einer Kennlinie einer Tellerfeder ähnlich ist. Im Übrigen wird ergänzend insbesondere auf Fig. 1 und die zugehörige Beschreibung verwiesen.

Fig. 7 zeigt eine Kupplung 700 mit einer Servofeder 702, die anpressplattenseitig eines Drahtrings 704 an Distanzbolzen 706 gelagert ist, in ausschnittsweiser Schnittdarstellung und die Servofeder 702 in Detailansicht. Mittels an den Distanzbolzen gelagerten Federelementen, beispielsweise Wellenfedern, wird die Servofeder 702 in eine definierte Position gebracht. Die Servofeder 702 ist anpressplattenseitig des Drahtrings 704 angeordnet, der seinerseits anpressplattenseitig einer Tellerfeder 708 angeordnet ist. Die Servofeder 702 stützt sich mit ihrem Innenrand 710 an Stufen 712 der Distanzbolzen 706 ab. Dazu weist die Servofeder 702 an ihrem Innenrand 710 Ausnehmungen 714 auf, die dem Abstützdurchmesser der Distanzbolzen 706 entsprechen. Der Drahtring 704 dient auch zur definierten und spielfreien Positionierung der Servofeder 702. Der Außenrand 716 der Servofeder 702 ist zur verschwenkbaren Anlage der Tellerfeder 708 verrundet ausgeführt. Im Übrigen wird ergänzend insbesondere auf Fig. 1 und die zugehörige Beschreibung verwiesen.

Fig. 8 zeigt eine Kupplung 800 mit einer Servofeder 802 mit Sicken 804, 806 in ausschnittsweiser Schnittdarstellung und die Servofeder 800 in Detailansicht. Die Servofeder 802 weist eine einer Tellerfeder 808 zugewandte Oberfläche 810 auf. Die Sicken 804 erheben sich über die Oberfläche 810. Die Sicken 804 bilden eine Auflage für die Tellerfeder 808. Die Servofeder 802 weist eine einer Anpressplatte 812 zugewandte Oberfläche 814 auf. Die Sicken 806 erheben sich über die Oberfläche 814. Mit den Sicken 806 liegt die Servofeder 800 auf Distanzbolzen 816 auf. Die Sicken 804 und die Sicken 806 sind in Umfangsrichtung jeweils abwechselnd angeordnet. Die Sicken 804 sind in Umfangsrichtung zwischen Ausnehmungen 818 angeordnet. Die Sicken 806 sind in Umfangsrichtung an den Ausnehmungen 818 angeordnet. Die Sicken 804, 806 sind radial außerhalb der Ausnehmungen 818 angeordnet. Im Übrigen wird ergänzend insbesondere auf Fig. 1 und Fig. 7 sowie die zugehörige Beschreibung verwiesen.

Fig. 9 zeigt eine Kupplung 900 mit einem gewellten Drahtring 902 zur Lagerung sowohl einer Tellerfeder 904 als auch einer Servofeder 906 in ausschnittsweiser Schnittdarstellung und in Detailansicht. Der Drahtring 902 ist anpressplattenseitig der Servofeder 906 angeordnet. Die Servofeder 906 weist radial innenseitig Ausnehmungen 908 für Distanzbolzen 910 auf. Die Ausnehmungen 908 sind jeweils größer als ein maximaler Querschnitt der Distanzbolzen 910. Der Drahtring 902 weist in Richtung der Tellerfeder 904 gewellte Abschnitte 912 auf, die durch die Ausnehmungen 908 hindurch zur Tellerfeder 904 ragen. Die Abschnitte 912 liegen an einer Stufe der Distanzbolzen 910 auf. Der Drahtring 902 dient somit zur Lagerung sowohl der Servofeder 906 als auch der Tellerfeder 904. Im Übrigen wird ergänzend insbesondere auf Fig. 1 und die zugehörige Beschreibung verwiesen.

Fig. 10 zeigt eine Kupplung 1000 mit einer Servofeder 1002, die unmittelbar an einem Gehäuse 1004 angeordnet ist, in ausschnittsweiser Schnittdarstellung. Die Servofeder 1002 weist an ihrem Außenrand Fortsätze 1006 auf, die in korrespondierende Ausnehmungen des Gehäuses 1004 eingreifen und sich an Auflageabschnitten 1008 des Gehäuses 1004 abstützen. Ein Innenrand der Servofeder 1002 stützt sich in einem Verschleißzustand bei einer Betätigung der Kupplung 1000 an einem Kraftrand einer Tellerfeder 1010 ab. Im Übrigen wird ergänzend insbesondere auf Fig. 1 und die zugehörige Beschreibung verwiesen.

Fig. 11 zeigt eine Kupplung 1100 mit einer anpressplattenseitig von Distanzbolzen 1102 angeordneten Servofeder 1104 in ausschnittsweiser Schnittdarstellung. Die Servofeder 1104 ist mithilfe eines Halteelements 1106 gelagert. Das Halteelement 1106 ist mit den Distanzbolzen 1102 und damit mit einem Gehäuse 1108 verbunden. Die Servofeder 1104 weist einen verlängerten Kraftrand auf. Im Übrigen wird ergänzend insbesondere auf Fig. 1 und die zugehörige Beschreibung verwiesen.

In Fig. 12 sind Diagramme zum Verlauf der Anpresskraft (oben) und der Ausrücckraft (unten) durch eine bevorzugte Auslegung einer der in den vorangegangenen Ausführungsbeispielen beschriebenen Servofeder 106, 202, 302, 402, 702, 802, 906, 1002, 1104, bzw. der entsprechenden Federelemente 502, 504, 506, 604 dargestellt.

Mit dem Bezugszeichen APKoS ist die Anpresskraftkennlinie ohne Servofeder dargestellt. Wenn Kupplungsverschleiß vorliegt, das heißt wenn sich die Anpressplatte weiter auf die Gegendruckplatte zubewegen muss, um die dünner werdenden Reibbeläge der Kupplungsscheibe reibschlüssig zu klemmen, steigt die Kennlinie APKoS an, da man sich im Diagramm vom Betriebspunkt BP ausgehend nach links bewegt.

Mit dem Bezugszeichen APKmS ist die Anpresskraftkennlinie mit Servofeder dargestellt, während mit dem Bezugszeichen S die Servofederkennlinie dargestellt ist. Das Bezugszeichen BF stellt die Kennlinie der Belagfederung der Kupplungsascheibe dar. Die Servofederkennlinie S ist derart ausgebildet, dass die Kennlinie APKmS sowie auch die entsprechenden Ausrückkraftkennlinien ARKn, ARKv im Neuzustand und im Verschleißzustand im Wesentlichen plateauförmig, ggf. leicht ansteigend oder abfallend, ausgebildet sind, das heißt zwischen dem Betriebspunkt BP im Neuzustand der Kupplung und dem Verschleißpunkt VP im Verschleißzustand der Kupplung auf einem konstanten, das heißt im Wesentlichen gleichbleibenden Kraftniveau verlaufen.

Die Servofeder ist in den vorangegangenen Ausführungsbeispielen vorzugsweise ausgebildet, im Minimum der von der Tellerfeder erzeugten Anpresskraft, das heißt im Minimum der Kennlinie APKoS anzugreifen. Die Servofeder wirkt der Tellerfeder entgegen und sorgt durch ihre bevorzugte Ausbildung dafür, dass die Kennlinie APKmS zwischen dem Betriebspunkt BP und dem Verschleißpunkt VP nicht unter dieses Minimum fällt. Somit lässt sich über die Lebensdauer der Kupplung z.B. am Kupplungspedal oder am Kupplungsaktor ein gleichbleibendes Kraftniveau erzeugen, da sich lediglich der Ausrückweg verlängert, die Ausrückkraft aber konstant bleibt.

### Bezugszeichenliste

- 100: Kupplung
- 102: Gehäuse
- 104: Tellerfeder
- 106: Servofeder
- 108: Anpressplatte
- 110: Kraftrand
- 112: Federzunge
- 114: Innenrand
- 116: Außenrand
- 118: Distanzbolzen
- 120: erste Stufe
- 122: zweite Stufe
- 124: erster Drahtring
- 126: zweiter Drahtring
- 128: Kante
- 130: Drahtring

- 200: Kupplung
- 202: Servofeder
- 204: Innenrand
- 206: Tellerfeder
- 208: Außenrand
- 210: Gehäuse

- 300: Stützfeder
- 302: Servofeder
- 304: Drahtring
- 306: Fortsatz
- 308: Fortsatz

- 400: Stützfeder
- 402: Servofeder
- 404: Auflageabschnitt
- 406: Auflageabschnitt

- 500: Tellerfeder
- 502: Federelement
- 504: Federelement
- 506: Federelement
- 508: Kraftrand
- 510: Federabschnitt
- 512: Anschlussabschnitt

- 600: Kupplung
- 602: Gehäuse
- 604: Federelement
- 606: Tellerfeder
- 608: Anpressplatte
- 610: Aufnahmeabschnitt
- 612: Anlageabschnitt
- 614: Anlageabschnitt

- 700: Kupplung
- 702: Servofeder
- 704: Drahtring
- 706: Distanzbolzen
- 708: Tellerfeder
- 710: Innenrand
- 712: Stufe
- 714: Ausnehmung
- 716: Außenrand

- 800: Kupplung
- 802: Servofeder
- 804: Sicke
- 806: Sicke
- 808: Tellerfeder
- 810: Oberfläche
- 812: Anpressplatte
- 814: Oberfläche
- 816: Distanzbolzen
- 818: Ausnehmung

- 900: Kupplung
- 902: Drahtring
- 904: Tellerfeder
- 906: Servofeder
- 908: Ausnehmung
- 910: Distanzbolzen
- 912: Abschnitt

- 1000: Kupplung
- 1002: Servofeder
- 1004: Gehäuse
- 1006: Fortsatz
- 1008: Auflageabschnitt
- 1010: Tellerfeder

- 1100: Kupplung
- 1102: Distanzbolzen
- 1104: Servofeder
- 1106: Halteelement
- 1108: Gehäuse

- BP: Betriebspunkt
- VP: Verschleißpunkt
- APKoS: Anpresskraftkennlinie ohne Servofeder
- APKmS: Anpresskarftkennlinie mit Servofeder
- BF: Kennlinie der Belagsfederung
- S: Servofederkennlinie
- ARKn: Ausrückkraftkennlinie im Neuzustand
- ARKv: Ausrückkraftkennlinie im Verschleißzustand

## Patentansprüche

1. Reibungskupplungseinrichtung (100), insbesondere für einen Antriebsstrang eines brennkraftmaschinengetriebenen Kraftfahrzeugs, aufweisend eine Drehachse, ein Gehäuse (102), wenigstens eine zu einer Betätigung zwischen einer eingerückten Betätigungsstellung und einer ausgerückten Betätigungsstellung relativ zu dem Gehäuse (102) in Richtung der Drehachse verlagerbare Anpressplatte (108), eine erste Feder (104) zur Beaufschlagung der wenigstens einen Anpressplatte (108), wobei die erste Feder (104) durch eine Schwenklagerung (118) verkippbar am Gehäuse (102) abgestützt ist, und eine zweite Feder (106) zur Reduzierung einer Betätigungskraft in einem Verschleißzustand, wobei die zweite Feder (106) sich auf einem ersten Durchmesser unmittelbar am Gehäuse (102) abstützt und sich auf einem zweiten Durchmesser abstützt, wobei der erste Durchmesser kleiner als der zweite Durchmesser ist, und der zweite Durchmesser radial innerhalb der Schwenklagerung (118) angeordnet ist, **dadurch gekennzeichnet, dass** die zweite Feder (106) sich auf dem zweiten Durchmesser unmittelbar an der ersten Feder (104) abstützt.

2. Reibungskupplungseinrichtung (100) nach Anspruch 1, wobei die zweite Feder (106) in axialer Richtung zwischen dem Gehäuse (102) und der ersten Feder (104) angeordnet ist.

3. Reibungskupplungseinrichtung (100) nach Anspruch 1 oder 2, wobei die unmittelbare Abstützung der zweiten Feder (106) am Gehäuse (102) und/oder an der ersten Feder (104) durch zumindest eine gehäuseseitige und/oder federseitige Verrundung oder Sicke erfolgt.

4. Reibungskupplungseinrichtung (100) nach einem der Ansprüche 1 bis 3, wobei die erste Feder (104) als Tellerfeder einer normal-eingerückten Reibungskupplungseinrichtung oder als Hebelfeder einer normal-ausgerückten Reibungskupplungseinrichtung ausgebildet ist.

5. Reibungskupplungseinrichtung (100) nach einem der Ansprüche 1 bis 4, wobei die erste Feder (104) Federzungen (112) aufweist, und sich die zweite Feder (106) im Bereich der Federzungen (112) an der ersten Feder (104) abstützt.

6. Reibungskupplungseinrichtung (100) nach einem der Ansprüche 1 bis 5, wobei die zweite Feder (106) ringförmig, vorzugsweise als Tellerfeder, ausgebildet ist.

7. Reibungskupplungseinrichtung (100), nach einem der Ansprüche 1 bis 6, wobei sich die zweite Feder (106) radial weiter nach innen erstreckt als eine Innenkante (128) einer Öffnung des Gehäuses (102).

## Claims

1. Friction clutch device (100), in particular for a drive train of a motor vehicle which is operated by internal combustion engine, having a rotational axis, a housing (102), at least one pressure plate (108) which can be moved relative to the housing (102) in the direction of the rotational axis for an actuation between an engaged actuating position and a disengaged actuating position, a first spring (104) for loading the at least one pressure plate (108), the first spring (104) being supported on the housing (102) such that it can be tilted by way of a pivot bearing (118), and a second spring (106) for reducing an actuating force in a worn state, the second spring (106) being supported on a first diameter directly on the housing (102) and being supported on a second diameter, the first diameter being smaller than the second diameter, and the second diameter being arranged radially within the pivot bearing (118), **characterized in that** the second spring (106) is supported on the second diameter directly on the first spring (104).

2. Friction clutch device (100) according to Claim 1, the second spring (106) being arranged in the axial direction between the housing (102) and the first ring (104) .

3. Friction clutch device (100) according to Claim 1 or 2, the direct support of the second spring (106) on the housing (102) and/or on the first spring (104) being brought about by way of at least one housing-side and/or spring-side rounded portion or bead.

4. Friction clutch device (100) according to one of Claims 1 to 3, the first spring (104) being configured as a cup spring of a normally engaged friction clutch device or as a lever spring of a normally disengaged friction clutch device.

5. Friction clutch device (100) according to one of Claims 1 to 4, the first spring (104) having spring tongues (112), and the second spring (106) being supported in the region of the spring tongues (112) on the first spring (104).

6. Friction clutch device (100) according to one of Claims 1 to 5, the second spring (106) being of annular configuration, preferably as a cup spring.

7. Friction clutch device (100) according to one of Claims 1 to 6, the second spring (106) extending radially further to the inside than an inner edge (128) of an opening of the housing (102).

## Revendications

1. Dispositif d'embrayage à friction (100), en particulier pour une chaîne cinématique d'un véhicule automobile entraîné par un moteur à combustion interne, comprenant un axe de rotation, un carter (102), au moins un plateau de pression (108) déplaçable par rapport au carter (102) dans la direction de l'axe de rotation entre une position d'actionnement embrayée et une position d'actionnement débrayée pour l'actionnement, un premier ressort (104) destiné à agir sur ledit au moins un plateau de pression (108), dans lequel le premier ressort (104) est supporté sur le carter (102) de manière basculante au moyen d'un palier de pivotement (118), et un deuxième ressort (106) servant à réduire une force d'actionnement dans un état d'usure, dans lequel le deuxième ressort (106) est supporté directement sur le carter (102) par un premier diamètre et est supporté par un deuxième diamètre, dans lequel le premier diamètre est inférieur au deuxième diamètre, et le deuxième diamètre est disposé radialement à l'intérieur du palier de pivotement (118), **caractérisé en ce que** le deuxième ressort (106) est supporté directement sur le premier ressort (104) par le deuxième diamètre.

2. Dispositif d'embrayage à friction (100) selon la revendication 1, dans lequel le deuxième ressort (106) est disposé entre le carter (102) et le premier ressort (104) dans la direction axiale.

3. Dispositif d'embrayage à friction (100) selon la revendication 1 ou 2, dans lequel le support direct du deuxième ressort (106) sur le carter (102) et/ou sur le premier ressort (104) s'effectue par au moins un arrondi ou une moulure côté carter et/ou côté ressort.

4. Dispositif d'embrayage à friction (100) selon l'une des revendications 1 à 3, dans lequel le premier ressort (104) est réalisé sous forme de rondelle-ressort d'un dispositif d'embrayage à friction normalement embrayé ou sous forme de ressort à levier d'un dispositif d'embrayage à friction normalement débrayé.

5. Dispositif d'embrayage à friction (100) selon l'une des revendications 1 à 4, dans lequel le premier ressort (104) comprend des languettes élastiques (112), et le deuxième ressort (106) est supporté sur le premier ressort (104) dans la région des languettes élastiques (112) .

6. Dispositif d'embrayage à friction (100) selon l'une des revendications 1 à 5, dans lequel le deuxième ressort (106) est réalisé de manière annulaire, de préférence sous forme de rondelle-ressort.

7. Dispositif d'embrayage à friction (100) selon l'une des revendications 1 à 6, dans lequel le deuxième ressort (106) s'étend radialement plus vers l'intérieur qu'un bord intérieur (128) d'une ouverture du carter (102).
